# EUROPÄISCHE PATENTSCHRIFT

(11) **EP 2 647 917 B1**
(45) Veröffentlichungstag und Bekanntmachung des Hinweises auf die Patenterteilung: **21.06.2017**
(21) Anmeldenummer: 13401028.9
(22) Anmeldetag: 21.03.2013
(51) Int. Cl.: F24C 15/00, G02B 6/00, F25D 27/00, H05B 6/64

(54) **Haushaltsgerät**
Domestic appliance
Appareil ménager

(30) Priorität: 02.04.2012 DE 102012102857
(43) Veröffentlichungstag der Anmeldung: 09.10.2013
(73) Patentinhaber: Miele & Cie. KG, 33332 Gütersloh (DE)
(72) Erfinder: Haase, Hans-Günter, 32257 Bünde (DE); Metz, Thomas, 32257 Bünde (DE); Oberhaus, Jens, 32130 Enger (DE); Rüter, Andreas, 32139 Spenge (DE); Schnee, Alexander, 32257 Bünde (DE); Schulze, Christian, 32130 Enger (DE)

(56) Entgegenhaltungen:
- EP-A1- 0 922 910
- EP-A1- 2 119 968
- EP-A2- 1 542 512
- EP-A2- 1 598 682
- WO-A1-2007/036207
- DE-A1- 3 445 923
- DE-A1- 4 100 605
- DE-A1- 19 810 184
- US-A- 6 133 558

## Beschreibung

Die vorliegende Erfindung betrifft ein Haushaltsgerät mit einem wenigstens durch eine Wandung abgegrenzten Aufnahmeraum für ein aufzunehmendes Gut. Es ist wenigstens eine Beleuchtungseinrichtung vorgesehen, um den Aufnahmeraum zu beleuchten. Obwohl die Erfindung im Ausführungsbeispiel im Wesentlichen mit Bezug auf Gargeräte beschrieben wird, so ist der Einsatz der Erfindung auch bei anderen Haushaltsgeräten möglich. Insbesondere - aber nicht nur - kann ein erfindungsgemäßes Haushaltsgerät auch als Spülmaschine, Waschmaschine, Trockner, Kühlschrank, Gefrierschrank oder als kombiniertes Kühl- und Gefriergerät oder dergleichen mehr ausgeführt sein. Grundsätzlich ist die Erfindung bei allen Haushaltsgeräten einsetzbar, die einen Aufnahmeraum für ein aufzunehmendes Gut aufweisen. Im Stand der Technik sind verschiedenste Haushaltsgeräte bekannt geworden, die einen durch wenigstens eine Wandung abgegrenzten Aufnahmeraum aufweisen, um in dem Aufnahmeraum ein Gut aufzubewahren, zu behandeln oder einfach aufzunehmen.

Aus der Druckschrift EP 1 542 512 A2 ist es bekannt Glühlampen, beispielsweise Halogenlampen einzusetzen, um einen solchen Aufnahmeraum zu beleuchten. Halogenlampen benötigen aber eine relative große Öffnung in der Wandung des Aufnahmeraums.

Die Druckschrift EP 1 598 682 A2 zeigt ein Haushaltgerät, bei dem die Beleuchtung des Aufnahmeraums mittels eines Lichtleiters erfolgt. Auch die Druckschrift DE 41 00 605 C2 zeigt einen starren Lichtleiter, mittels dem Licht von einer Lampe um einen Aufnahmeraum herum zu einer Öffnung des Aufnahmeraums geführt wird.

Insbesondere bei Haushaltsgeräten, bei denen im Aufnahmeraum eine feuchte und/oder heiße und/oder kalte Atmosphäre vorherrscht, unterliegen darin oder daran eingesetzte Beleuchtungseinrichtungen schwierigen Umgebungsbedingungen, die zu einem schnelleren Verschleiß und/oder Defekt führen können.

Es ist deshalb die Aufgabe der vorliegenden Erfindung, ein Haushaltsgerät mit wenigstens einer Beleuchtungseinrichtung zur Beleuchtung eines Aufnahmeraums zur Verfügung zu stellen, bei dem in vorteilhafter Weise eine Beleuchtung des Aufnahmeraums möglich ist.

Diese Aufgabe wird gelöst durch ein Haushaltsgerät mit den Merkmalen des Anspruchs 1. Bevorzugte Weiterbildungen der Erfindung sind Gegenstand der Unteransprüche. Weitere Vorzüge und Merkmale der vorliegenden Erfindung ergeben sich aus der allgemeinen Beschreibung und der Beschreibung des Ausführungsbeispiels.

Ein erfindungsgemäßes Haushaltsgerät verfügt über wenigstens einen durch wenigstens eine Wandung abgegrenzten Aufnahmeraum für ein daran oder darin aufzunehmendes Gut. Es ist wenigstens eine Beleuchtungseinrichtung vorgesehen, um den Behandlungsraum zu beleuchten. Wenigstens ein von wenigstens einer Lichtquelle der wenigstens einen Beleuchtungseinrichtung ausgestrahltes Licht wird über einen wenigstens teilweise elastisch ausgebildeten Lichtleiter in den Aufnahmeraum eingekoppelt.

Das erfindungsgemäße Haushaltsgerät hat viele Vorteile. Ein erheblicher Vorteil des erfindungsgemäßen Haushaltsgeräts besteht darin, dass das von einer Lichtquelle ausgestrahlte Licht wenigstens teilweise über einen wenigstens teilweise elastisch ausgebildeten Lichtleiter in den Aufnahmeraum eingekoppelt wird. Dadurch kann der Lichtleiter sich an die Kontur oder Art der Öffnung anpassen. Außerdem ist es beispielsweise möglich, den Lichtleiter in einer Öffnung der Wandung des Aufnahmeraums anzuordnen, wobei der Lichtleiter beim Einführen in die Öffnung elastisch verformt wird. Nach dem Einführen erfolgt eine beispielsweise reversible Zurückverformung des elastischen Lichtleiters, sodass er vorzugsweise fest an der entsprechenden Öffnung aufgenommen ist. Erfindungsgemäß ist der Lichtleiter in einer Öffnung der Wandung des Aufnahmeraums dichtend angeordnet. Eine solche Weiterbildung ist besonders vorteilhaft, da der Lichtleiter nicht nur in einer Öffnung der Wandung aufgenommen ist, sondern dort dichtend angeordnet wird. Dadurch kann eine Abdichtung des Aufnahmeraums nach außen erfolgen. Eine solche Abdichtung kann beispielsweise einen Wärme- und/oder Stoffaustausch mit der Umgebung des Aufnahmeraums verringern oder sogar gänzlich unterbinden. Dadurch kann beispielsweise die Temperatur in dem Aufnahmeraum konstanter gehalten werden, als wenn über ein Loch in der Wandung ein Austausch mit der Umgebung möglich ist. Außerdem kann beispielsweise Feuchte aus dem Aufenthaltsraum besser herausgehalten oder besser darin eingeschlossen werden. So ergeben sich für viele Anwendungsfälle vorteilhafte Bedingungen. Erfindungsgemäß ist der Lichtleiter oder wenigstens ein Lichtleiter der Beleuchtungseinrichtung wenigstens in dem Bereich der Öffnung in der Wandung des Aufnahmeraums elastisch und selbstdichtend ausgebildet. Diese Weiterbildung ermöglicht zwei Funktionen des Lichtleiters. Der Lichtleiter transportiert eingestrahltes Licht weiter und dichtet die Öffnung in der Wandung des Aufnahmeraums elastisch und selbstdichtend ab. Dadurch werden mehrere Funktionen durch ein Bauteil übernommen, sodass eine einfachere Montage und eine zuverlässigere Funktion ermöglicht werden. Vorzugsweise ist der Lichtleiter wenigstens in einem Bereich der Öffnung in der Wandung des Behandlungsraums wärme- und/oder feuchtbeständig. Dabei ist der Lichtleiter wenigstens in dem Bereich der Öffnung in der Wandung des Behandlungsraums vorzugsweise für Temperaturen bis 70°C und insbesondere 90°C und vorzugsweise bis wenigstens Temperaturen von 120°C temperaturbeständig ausgebildet. Besonders vorteilhaft ist es, insbesondere bei dem Einsatz an Gargeräten, wenn der Lichtleiter wenigstens in einem Bereich der Öffnung in der Wandung des Behandlungsraums für Temperaturen bis wenigstens 150°C und vorzugsweise 250°C temperaturbeständig ausgebildet ist. Besonders besteht der Lichtleiter dabei aus einem solchen Material, das für relative Luftfeuchtigkeiten von mehr als 50 % und insbesondere von bis zu 100 % beständig ist. Besonders bevorzugt ist der Lichtleiter wenigstens in dem vorgesehen Wellenlängenbereich optisch transparent und auch dauerhaft optisch transparent, wenn der Lichtleiter häufigeren Temperaturwechseln zwischen beispielsweise Umgebungstemperatur und typischen Temperaturen in einem Backofen oder einem Gefrierschrank ausgesetzt ist.

Es hat sich herausgestellt, dass viele Materialien bei hohen Luftfeuchtigkeiten und hohen Temperaturen nicht dauerhaft optisch transparent bleiben.

Besonders bevorzugt besteht der Lichtleiter wenigstens teilweise aus einem flexiblen Material. In bevorzugten Ausgestaltungen besteht der Lichtleiter wenigstens teilweise aus wenigstens einem Silikon oder einem silikonartigen Material. Besonders bevorzugt besteht der Lichtleiter über wenigstens einen Abschnitt oder auch vollständig aus einem flexiblen Material und insbesondere einem Silikon. Silikon bietet auch den Vorteil, dass es beispielsweise in einem Garraum dauerhaft optisch transparent bleibt.

Es ist aber auch möglich, dass der Lichtleiter zwei oder mehr Abschnitte oder Teile umfasst, die jeweils aus unterschiedlichen Materialien oder auch aus gleichen Materialien bestehen.

Möglich ist es beispielsweise, dass ein Abschnitt des Lichtleiters im Wesentlichen aus einem elastischen Material besteht und dass wenigstens ein Abschnitt des Lichtleiters im Wesentlichen aus einem starren Material besteht.

Der Abschnitt des Lichtleiters aus einem elastischen Material ist vorzugsweise an der Öffnung in der Wandung des Aufnahmeraums vorgesehen. Dadurch kann der elastische Abschnitt neben der Lichtleitfunktion auch eine Dichtfunktion an der Wandung des Aufnahmeraums ausüben. Ferner kann dieser Abschnitt oder ein anderer Abschnitt des Lichtleiters, welcher aus einem elastischen Material besteht, und/oder ein Abschnitt des Lichtleiters, welcher im Wesentlichen aus einem starren Material besteht, eine Arretierfunktion ausüben, etwa durch Hintergreifen oder Verrasten an der Öffnung in der Wandung des Aufnahmeraums.

Vorzugsweise ist an dem Lichtleiter wenigstens ein Führungselement vorgesehen, um wenigstens eine Lichtquelle anzukoppeln oder zu führen. Insbesondere ist das Führungselement an dem elastischen Teil des Lichtleiters vorgesehen. Dadurch wird es ermöglicht, dass Toleranzen zwischen dem Lichtleiter und der Lichtquelle ausgeglichen werden. Besonders bevorzugt ist es, dass die Lichtquelle starr oder im Wesentlichen starr und der Lichtleiter schwimmend angeordnet sind. Möglich ist es auch, dass die Lichtquelle und der Lichtleiter starr oder im Wesentlichen starr angeordnet sind. In beiden Ausgestaltungen ermöglicht der elastisch ausgebildete Lichtleiter eine Anpassung von Fertigungs- und Montagetoleranzen untereinander. So wird dafür gesorgt, dass die Lichtquelle in vernünftiger Art und Weise Licht in den Lichtleiter einkoppelt. Ein derartiges Führungselement bewirkt eine bessere Kopplung der unterschiedlichen Komponenten, ohne dass der Lichtleiter und/oder die Lichtquelle großen Kräften oder Belastungen ausgesetzt werden.

In vorteilhaften Ausgestaltungen umfasst die Lichtquelle wenigstens eine Leuchtdiode (LED). Vorzugsweise ist die LED außerhalb des Aufnahmeraums angeordnet. Besonders bevorzugt befindet sich die LED beabstandet von der Wandung des Aufnahmeraums, insbesondere dann, wenn der Aufnahmeraum temperiert wird oder Temperaturschwankungen unterliegt. Durch eine Beabstandung der LED von der Wandung des Aufnahmeraums kann eine Entkopplung der Temperatur der Lichtquelle von der Temperatur des Aufnahmeraums und/oder der Wandung des Aufnahmeraums erzielt werden.

Insbesondere LEDs - aber auch andere Lichtquellen - sind in der Funktion und Haltbarkeit temperaturabhängig. Wird eine derartige Entkopplung der Arbeitstemperatur der Lichtquelle von der Wandung und von der Temperatur der Wandung und/oder der Temperatur des Aufnahmeraums gewährleistet, so kann eine bessere Funktion und/oder eine bessere Haltbarkeit der Lichtquelle ermöglicht werden. Gegebenenfalls kann auch für eine angenehmere und konstantere Beleuchtung im Aufnahmeraum gesorgt werden.

In allen Ausgestaltungen ist es besonders bevorzugt, dass der Aufnahmeraum als Garraum ausgebildet ist. Vorteilhafterweise ist der Aufnahmeraum als Garraum dazu über wenigstens eine Heizquelle beheizbar. Möglich ist es beispielsweise, dass wenigstens eine Mikrowellenquelle vorgesehen ist. Bevorzugt ist es auch, dass wenigstens eine Heizquelle als Dampfquelle ausgebildet ist. Ebenso kann auch wenigstens eine thermische Heizquelle, wie beispielsweise ein Heizstrahler oder Heizstab oder dergleichen vorgesehen sein.

Wenn beispielsweise eine Heizquelle als Mikrowellenquelle ausgebildet ist, hat es sich als vorteilhaft erwiesen, wenn der an dem oder in dem Garraum vorhandene Teil des Lichtleiters aus Silikon oder einem silikonartigen oder Silikon enthaltenden Material besteht. Silikon hat den erheblichen Vorteil, dass es nicht nur für Strahlung im sichtbaren Wellenlängenbereich transparent ist, sodass eine effektive Lichtleiterfunktion ermöglicht wird, sondern es ist auch für Mikrowellenstrahlung, wie sie in Mikrowellen eingesetzt wird, transparent. Es hat sich herausgestellt, dass in solchen Einsatzfällen Materialien als Lichtleiter nur wenig oder gar nicht geeignet sind, wenn sie in einem erhöhten Maße Mikrowellen absorbieren. Im Mikrowellenbetrieb führen solche Materialien dazu, dass sich ihre Temperatur örtlich entsprechend erhöht. Auf Dauer führt dies oft zu Materialermüdung, Materialverfärbung oder gegebenenfalls zu Ausdampfungen aus dem Inneren des Materials. Diese Nachteile hat Silikon als Material nicht, sodass es sich hier in einem besonderen Maße für den Einsatz in einem Garraum mit Mikrowellenbetrieb eignet.

In bevorzugten Ausgestaltungen ist der Garraum über wenigstens eine Dampfquelle beheizbar vorgesehen. Die Dampfquelle kann innerhalb des Garraums vorgesehen sein. In besonders bevorzugten Ausgestaltungen ist die Dampfquelle außerhalb des Garraumes angeordnet. An dem Garraum ist dann wenigstens eine Dampfeinlassöffnung vorgesehen, um Dampf von der Dampfquelle in den Garraum einzuleiten.

Dampfgarer sind oftmals drucklos arbeitende Geräte, bei denen der Garraum eine Verbindung zur Umgebung aufweist, um einen Druckausgleich zu ermöglichen. Bei solchen Haushaltsgeräten ist es bevorzugt, dass wenigstens eine Auslassöffnung oder Dampfauslassöffnung an dem Garraum vorgesehen ist.

In allen Ausgestaltungen ist es möglich, dass eine gemeinsame Baueinheit vorgesehen ist, die beispielsweise austauschbar an der Wandung des Aufnahmeraums angeordnet ist. Wenn das Haushaltsgerät als Gargerät ausgeführt ist, ist eine solche gemeinsame Baueinheit vorzugsweise an der Wandung des Garraums vorgesehen. In der gemeinsamen Baueinheit kann beispielsweise eine Leuchteinheit und/oder ein Lichtleiter angeordnet sein, um das von der Lichtquelle der Beleuchtungseinrichtung ausgestrahlte Licht in den Aufnahmeraum einzukoppeln. Unter dem Begriff Einkoppeln wird im Sinne dieser Anmeldung auch ein einfaches Einleiten des Lichtes verstanden.

Es ist möglich, dass der Lichtleiter über eine Leuchteinheit, welche ein oder mehrere optische Elemente etwa zur Streuung, Bündelung und/oder Umlenkung des Lichts umfassen kann, das von der Lichtquelle ausgestrahlte Licht in den Aufnahmeraum einkoppelt. Es ist aber auch möglich, dass der Lichtleiter direkt und also ohne weitere Leuchteinheit das von der Lichtquelle ausgestrahlte Licht in den Aufnahmeraum einleitet.

Insgesamt hat das erfindungsgemäße Haushaltsgerät viele Vorteile, da es einen einfachen Aufbau, eine zuverlässige Funktion und eine günstige Fertigungsweise ermöglicht. Eine Öffnung in den Aufnahmeraum zur Einkopplung des ausgestrahlten Lichtes kann kleinbauend ausgeführt werden und beispielsweise nur einen Durchmesser von einem Millimeter oder doch jedenfalls nur einen Durchmesser von einigen Millimetern in der Wandung des Aufnahmeraums benötigen. Dadurch kann auch zuverlässig der Austritt von Mikrowellen verhindert werden, wenn das Haushaltsgerät beispielsweise als Gargerät ausgeführt ist und über eine Mikrowellenquelle verfügt. Der Einsatz eines Lochgitters ist nicht erforderlich.

Auch die Reinigung des Aufnahmeraums wird vereinfacht, da die Anzahl der Einbauten geringer wird. Der in den Aufnahmeraum mündende Lichtleiter kann einfach abgewischt werden. Besondere Vorsicht ist beim Reinigen nicht nötig, wenn der Lichtleiter elastisch ausgebildet ist.

Der Einsatz von Silikon erlaubt in vorteilhafter Weise eine gleichzeitige Funktion als Lichtleiter und als Dichtung. Andere Kunststoffe sind oftmals nicht transparent genug für den Einsatz als Lichtleiter. Ein weiteres Problem besteht oftmals darin, dass entsprechend einsetzbare Kunststoffe den atmosphärischen Bedingungen eines solchen Aufnahmeraums nicht dauerhaft aussetzbar sind. Des Weiteren besteht bei Kunststoffen oftmals das Risiko, das sie sich bei Einsatz von Mikrowellen bis zur Zerstörung erwärmen.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
Figur 1 eine schematische Vorderansicht eines erfindungsgemäßen Haushaltsgeräts;
Figur 2 eine vergrößerte schematische Vorderansicht eines Details aus Figur 1; und
Figur 3 eine stark schematische Querschnittsansicht der Rückwand des Haushaltsgeräts gemäß Figur 1.

Mit Bezug auf die beiliegenden Figuren wird im Folgenden ein Ausführungsbeispiel eines erfindungsgemäßen Haushaltsgeräts 1 beschrieben, welches hier als Gargerät 100 ausgeführt ist. Ein solches Gargerät 100 kann sowohl als Einbaugerät als auch als alleinstehendes Gargerät ausgebildet sein.

In analoger Weise kann ein Haushaltsgerät 1 auch für andere Einsatzzwecke ausgebildet sein.

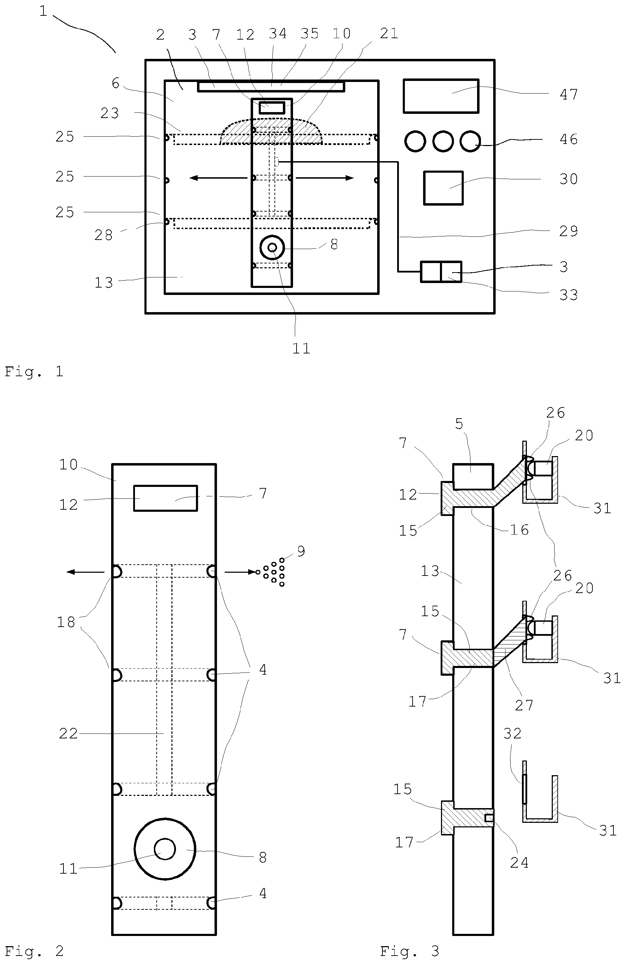

In Figur 1 ist das Haushaltsgerät 1 in einer stark schematischen und vereinfachten Darstellung in einer Vorderansicht abgebildet. Das als Gargerät 100 ausgeführte Haushaltsgerät 1 weist einen Aufnahmeraum 6 auf, der hier als Garraum 2 dient. Der als Garraum 2 dienende Aufnahmeraum 6 kann über unterschiedliche Heizquellen 3 beheizbar sein. Hier sind eine Dampfquelle 33, eine Mikrowellenquelle 34 und gegebenenfalls wenigstens ein Heizkörper 35 vorgesehen, um den Garraum 2 beziehungsweise den Aufnahmeraum 6 zu beheizen.

Die Dampfquelle 33 leitet Dampf 9 (vergleiche Figur 2) über mehrere Dampfeinlassöffnungen 4 auf gegebenenfalls mehreren Ebenen in den Garraum 2 ein. Zur Verteilung des Dampfes 9 kann eine Dampfführung 22 vorgesehen sein.

Das Gargerät 100 verfügt über eine Auslassöffnung 8, über die beispielsweise überschüssiger Dampf aus dem Gargerät 100 nach außen austreten kann. Ebenso kann über die Auslassöffnung 8 gegebenenfalls Luft aus der Umgebung in den Aufnahmeraum 6 angesaugt werden, wenn durch den im Aufnahmeraum 6 kondensierenden Dampf 9 ein örtlicher Unterdruck entsteht.

Das in Figur 1 dargestellte Haushaltsgerät 1 ist mit einer Steuereinrichtung 30, mit Bedienknöpfen 46 und einer Anzeige 47 ausgerichtet. Die Anzeige 47 dient zur Anzeige des Betriebszustandes und/oder um das gewählte Geräteprogramm oder weitere Informationen auszugeben. In dem als Garraum 2 ausgeführten Aufnahmeraum 6 sind hier mehrere Garebenen 25 vorgesehen. An in entsprechender Höhe angebrachten Haltern 28 können Gargutträger 23 angeordnet werden, um ein entsprechendes Gut 21 zu garen. Das Gargut, die Speise, beziehungsweise das Gut 21, können über einen entsprechend ausgebildeten Garbehälter, Garblech oder sonstigen Gargutträger 23 gehalten werden.

In dem Ausführungsbeispiel sind die Dampfeinlassöffnungen 4, die Auslassöffnung 8 und eine Leuchteinheit 12 an einer gemeinsamen Baueinheit 10 angeordnet. Die Baueinheit 10 ist hier an der Rückwand 13 des Aufnahmeraums 6 angeordnet. Beispielsweise kann die Baueinheit 10 in eine entsprechend große Öffnung in der Rückwand 13 des Aufnahmeraums 6 montiert werden. Somit kann die Baueinheit 10 Teil der Wandung 5 des Aufnahmeraums 6 sein. Möglich ist es aber auch, dass die Baueinheit 10 im Inneren des Aufnahmeraums 6 angeordnet ist.

Durch die gemeinsame Baueinheit 10 wird die Montage erheblich erleichtert, da die als Dampfdüsen 18 ausgeführten Dampfeinlassöffnungen 4, die Auslassöffnung 8 und die Leuchteinheit 12 an der gemeinsamen Baueinheit 10 vormontiert werden können. Dadurch wird der Montageaufwand erheblich verringert.

An der Auslassöffnung 8 ist auch ein Temperaturfühler 11 angeordnet, der durch die Anordnung im Bereich der Auslassöffnung 8 sehr feinfühlig Temperaturänderungen im Aufnahmeraum 6 erfasst.

Über die Leuchteinheit 12, die Teil der Beleuchtungseinrichtung 7 ist, wird Licht bei Bedarf in den Aufnahmeraum 6 eingekoppelt.

Die Leuchteinheit 12 kann Teil des Lichtleiters 15 sein, der Licht einer Lichtquelle 20 (vergleiche Figur 3) von außerhalb des Aufnahmeraums 6 nach innerhalb des Aufnahmeraums 6 leitet.

Figur 3 zeigt den prinzipiellen Aufbau der Beleuchtungseinrichtung 7. Die Beleuchtungseinrichtung 7 kann in die Baueinheit 10 eingesetzt werden. Es ist aber ebenso möglich, dass die Beleuchtungseinrichtung 7 oder wenigstens eine Beleuchtungseinrichtung 7 direkt in die Rückwand 13 des Gargerätes 100 eingesetzt wird. Dazu kann in der Rückwand 13 beziehungsweise in der Baueinheit 10 eine entsprechende Öffnung 16 vorgesehen werden, in die die Beleuchtungseinrichtung 7 oder ein Teil der Beleuchtungseinrichtung 7 eingesetzt wird.

Hier ist eine Trägereinheit 31 vorgesehen, die die Lichtquelle 20 definiert aufnimmt. Die Lichtquelle 20 ist beabstandet von der Wandung 5 des Aufnahmeraums 6 angeordnet, sodass die Lichtquelle 20 von der Temperatur der Wandung 5 des Aufnahmeraums 6 entkoppelt ist. Hier ist die Lichtquelle 20 außerhalb des Aufnahmeraums 6 vorgesehen, sodass die Temperatur der Lichtquelle 20 auch von der Temperatur des Aufnahmeraums 6 entkoppelt ist. Das führt zu einer besseren Lichtausbeute und einer höheren Lebensdauer der vorzugsweise als LED ausgeführten Lichtquellen 20.

Das von der Lichtquelle 20 ausgestrahlte Licht wird über den Lichtleiter 15 in den Aufnahmeraum 6 geleitet.

In Figur 3 sind drei Lichtleiter 15 abgebildet. Der oberste Lichtleiter 15 ist insgesamt einstückig ausgebildet und verfügt über mehrere Führungselemente 26, die eine definierte Orientierung der Lichtquelle 20 zu dem Lichtleiter 15 gewährleisten. Hier besteht der Lichtleiter 15 insgesamt aus einem elastischen und hier auch flexiblen Material. Der Lichtleiter 15 besteht insgesamt aus einem Silikon oder einem silikonartigen Material. Dadurch ist der Lichtleiter flexibel und dichtet die Öffnung 16 zu der Wandung 5 des Aufnahmeraums 6 ab. Der Einsatz einer weiteren Dichtung ist möglich, aber nicht nötig. Die Lichtquelle 20 ist starr an der Trägereinheit 31 vorgesehen. Der Lichtleiter 15 ist schwimmend an der Trägereinheit 31 aufgenommen. Dadurch können Montagetoleranzen ausgeglichen werden. Durch die Führungselemente oder Führungsnasen 26 an dem Ende des Lichtleiters 15, welcher benachbart zu der Lichtquelle 20 angeordnet ist, wird eine vernünftige Einkopplung des von der Lichtquelle ausgestrahlten Lichts in den Lichtleiter 15 gewährleistet.

In der Mitte der Figur 3 ist eine weitere Beleuchtungseinrichtung 7 beziehungsweise ein weiterer Lichtleiter 15 dargestellt. Der Lichtleiter 15 in der Mitte der Figur 3 verfügt über zwei Abschnitte 17 und 27. Der Abschnitt 17 des Lichtleiters 15 ist in der Öffnung 16 in der Wandung 5 des Aufnahmeraums 6 angeordnet. Der Abschnitt 17 des Lichtleiters 15 besteht aus einem elastischen und hier flexiblen Material und dichtet so die Öffnung 16 ab. Außerhalb des Aufnahmeraums 6 befindet sich der Abschnitt 27 des Lichtleiters, der hier als separates Teil ausgebildet ist. Die Abschnitte 17 und 27 sind miteinander verbunden. Möglich ist es beispielsweise, die beiden Abschnitte 17 und 27 form- und/oder kraftschlüssig miteinander zu verbinden. Der Abschnitt 27 kann aus dem gleichen Material bestehen wie der Abschnitt 17, kann aber auch aus einem anderen Material bestehen. Möglich ist hier auch der Einsatz eines starren Kunststoffes, der gegebenenfalls nicht feuchtbeständig und/oder mikrowellenbeständig ist oder sein muss, da der Abschnitt 27 außerhalb des Garraumes 2 angeordnet ist.

Im unteren Teil der Figur 3 ist eine dritte Variante abgebildet. Hier wird nur ein Abschnitt 17 des Lichtleiters 15 dargestellt. Der Abschnitt 17 weist ein Koppelelement 24 auf, welches hier als Vertiefung, Bohrung oder Loch in dem Abschnitt 17 ausgebildet ist. Ein entsprechend zweiter Abschnitt 27 weist ein entsprechendes Koppelelement auf, das mit dem Koppelelement 24 gekoppelt werden kann. Sichtbar ist in dem unteren Teil der Figur 3 auch die Aufnahme 32 an der Trägereinheit 31 zur Aufnahme des Lichtleiters 15 und zur Ausrichtung des Lichtleiters 15 in Bezug zu der Lichtquelle 20. Die Aufnahme 31 kann beispielsweise ein Schlitz in einer Wandung der Trägereinheit 31 oder aber auch ein Loch in der Wandung der Trägereinheit 31 sein.

Insgesamt stellt die Erfindung ein vorteilhaftes Haushaltsgerät zur Verfügung, mit dem die Beleuchtung von Aufnahmeräumen vereinfacht wird. Dabei kann sowohl die Montage erleichtert als auch gegebenenfalls die Haltbarkeit vergrößert werden. Insbesondere bei dem Einsatz an Gargeräten mit Mikrowellenfunktion wird eine einfache und zuverlässige Funktion ermöglicht. Auch die Reinigung wird vereinfacht, da weniger Einbauten nötig sind.

Bei Bedarf können mehrere solcher Beleuchtungseinrichtungen an einem oder mehreren Aufnahmeräumen eines Haushaltsgeräts 1 vorgesehen werden.

### Bezugszeichenliste

- 1: Gargerät
- 2: Garraum
- 3: Heizquelle
- 4: Dampfeinlassöffnung
- 5: Wandung
- 6: Aufnahmeraum
- 7: Beleuchtungseinrichtung
- 8: Auslassöffnung
- 9: Dampf
- 10: Baueinheit
- 11: Temperaturfühler
- 12: Leuchteinheit
- 13: Rückwand
- 15: Lichtleiter
- 16: Öffnung
- 17: Abschnitt des Lichtleiters
- 18: Dampfdüse
- 20: Lichtquelle
- 21: Speise, Gargut
- 22: Dampfführung
- 23: Gargutträger, Garbehälter, Garblech
- 24: Koppelelement
- 25: Garebene
- 26: Führungselement
- 27: Abschnitt des Lichtleiters
- 28: Halter
- 29: Dampfleitung
- 30: Steuereinrichtung
- 31: Trägereinheit
- 32: Aufnahme
- 33: Dampfquelle
- 34: Mikrowellenquelle
- 35: Heizkörper
- 46: Bedienknopf
- 47: Anzeige
- 100: Gargerät

## Patentansprüche

1. Haushaltsgerät (1) mit einem durch wenigstens eine Wandung (5) abgegrenzten Aufnahmeraum (6) für ein aufzunehmendes Gut (21), wobei das Haushaltsgerät eine Beleuchtungseinrichtung (7) mit einer Lichtquelle (20) und einem wenigstens teilweise elastisch ausgebildeten Lichtleiter (15) umfasst, um den Aufnahmeraum (6) zu beleuchten, wobei ein von der Lichtquelle (20) der Beleuchtungseinrichtung (7) ausgestrahltes Licht über den Lichtleiter (15) in den Aufnahmeraum (6) eingekoppelt wird, wobei der Lichtleiter (15) in einer Öffnung (16) in der Wandung (5) des Aufnahmeraums (6) angeordnet ist,
**dadurch gekennzeichnet, dass**
der Lichtleiter wenigstens in dem Bereich der Öffnung (16) in der Wandung (6) des Aufnahmeraums (6) elastisch und selbstdichtend ausgebildet ist.

2. Haushaltsgerät (1) nach Anspruch 1, **dadurch gekennzeichnet, dass** der Lichtleiter (15) wenigstens in einem Bereich der Öffnung (16) in der Wandung (5) des Behandlungsraums (6) wärme- und feuchtebeständig ist.

3. Haushaltsgerät (1) nach einem der vorhergehenden Ansprüche, **dadurch gekennzeichnet, dass** der Lichtleiter (15) wenigstens teilweise aus einem flexiblen Material und vorzugsweise wenigstens teilweise aus Silikon oder einem silikonartigen Material besteht.

4. Haushaltsgerät (1) nach einem der vorhergehenden Ansprüche, **dadurch gekennzeichnet, dass** wenigstens ein Abschnitt (17) des Lichtleiters (15) im Wesentlichen aus einem elastisch Material und wenigstens ein Abschnitt (27) des Lichtleiters (15) im Wesentlichen aus einem starren Material besteht.

5. Haushaltsgerät (1) nach einem der vorhergehenden Ansprüche, **dadurch gekennzeichnet, dass** an dem Lichtleiter (15) wenigstens ein Führungselement (26) vorgesehen ist, um wenigstens eine Lichtquelle (20) anzukoppeln.

6. Haushaltsgerät (1) nach einem der vorhergehenden Ansprüche, **dadurch gekennzeichnet, dass** die Lichtquelle (20) starr und der Lichtleiter (15) schwimmend angeordnet sind.

7. Haushaltsgerät (1) nach einem der vorhergehenden Ansprüche, **dadurch gekennzeichnet, dass** die Lichtquelle (20) wenigstens eine LED umfasst, welche insbesondere außerhalb und vorzugsweise beabstandet von der Wandung (5) des Aufnahmeraums (6) angeordnet ist.

8. Haushaltsgerät (1) nach einem der vorhergehenden Ansprüche, **dadurch gekennzeichnet, dass** die wenigstens eine Lichtquelle (20) und der Lichtleiter (15) von einer Trägereinheit (31) gestützt werden.

9. Haushaltsgerät (1) nach einem der vorhergehenden Ansprüche, **dadurch gekennzeichnet, dass** der Aufnahmeraum (6) als Garraum (2) ausgebildet ist und über wenigstens eine Heizquelle (3) beheizbar ist.

10. Haushaltsgerät (1) nach Anspruch 9, **dadurch gekennzeichnet, dass** wenigstens eine der wenigstens einen Heizquelle (3) als Mikrowellenquelle (34) ausgebildet ist.

11. Haushaltsgerät (1) nach einem der Ansprüche 9 oder 10, **dadurch gekennzeichnet, dass** wenigstens eine der wenigstens einen Heizquelle (3) als Dampfquelle (33) ausgebildet ist.

12. Haushaltsgerät (1) nach Anspruch 11, **dadurch gekennzeichnet, dass** an dem Garraum (2) wenigstens eine Auslassöffnung (8) vorgesehen ist, über welche Dampf (9) aus dem Garraum (2) austreten kann.

13. Haushaltsgerät (1) nach einem der Ansprüche 11 oder 12, **dadurch gekennzeichnet, dass** die Dampfquelle (33) außerhalb des Garraumes (2) vorgesehen ist und dass an dem Garraum (2) wenigstens eine Dampfeinlassöffnung (4) vorgesehen ist, um Dampf (9) von der Dampfquelle (33) in den Garraum (2) einzuleiten.

14. Haushaltsgerät (1) nach einem der Ansprüche 12 oder 13, **dadurch gekennzeichnet, dass** der Lichtleiter (15) und wenigstens eine Auslassöffnung (8) und/oder wenigstens eine Dampfeinlassöffnung (4) an einer gemeinsamen Baueinheit (10) angeordnet sind, die austauschbar an dem Garraum (2) vorgesehen ist.

## Claims

1. Domestic appliance (1) comprising a receiving chamber (6), delimited by at least one wall (5), for a product (21) to be received, the domestic appliance comprising an illumination means (7) comprising a light source (20) and an optical waveguide (15) that is resilient at least in part, for illuminating the receiving chamber (6), light emitted by the light source (20) of the illumination means (7) being coupled into the receiving chamber (6) via the optical waveguide (15), the optical waveguide (15) being arranged in an opening (16) in the wall (5) of the receiving chamber (6), **characterised in that** the optical waveguide is designed to be resilient and self-sealing at least in the region of the opening (16) in the wall (6) of the receiving chamber (6).

2. Domestic appliance (1) according to claim 1, **characterised in that** the optical waveguide (15) is heat- and moisture-resistant at least in a region of the opening (16) in the wall (5) of the treatment chamber (6).

3. Domestic appliance (1) according to either of the preceding claims, **characterised in that** the optical waveguide (15) consists of a flexible material at least in part, and preferably of silicone or a silicone-like material at least in part.

4. Domestic appliance (1) according to any of the preceding claims, **characterised in that** at least one portion (17) of the optical waveguide (15) substantially consists of a resilient material, and at least one portion (27) of the optical waveguide (15) substantially consists of a rigid material.

5. Domestic appliance (1) according to any of the preceding claims, **characterised in that** at least one guide element (26) is provided on the optical waveguide (15) in order to couple at least one light source (20).

6. Domestic appliance (1) according to any of the preceding claims, **characterised in that** the light source (20) is arranged in a rigid manner and the optical waveguide (15) is arranged in a floating manner.

7. Domestic appliance (1) according to any of preceding claims, **characterised in that** the light source (20) comprises at least one LED which is arranged in particular outside and preferably at a distance from the wall (5) of the receiving chamber (6).

8. Domestic appliance (1) according to any of the preceding claims, **characterised in that** the at least one light source (20) and the optical waveguide (15) are supported by a carrier unit (31).

9. Domestic appliance (1) according to any of the preceding claims, **characterised in that** the receiving chamber (6) is designed as a cooking chamber (2) and can be heated by means of at least one heat source (3).

10. Domestic appliance (1) according to claim 9, **characterised in that** at least one of the at least one heat sources (3) is designed as a microwave source (34).

11. Domestic appliance (1) according to either claim 9 or claim 10, **characterised in that** at least one of the at least one heat sources (3) is designed as a steam source (33).

12. Domestic appliance (1) according to claim 11, **characterised in that** at least one outlet opening (8) is provided on the cooking chamber (2), via which opening steam (9) can exit the cooking chamber (2).

13. Domestic appliance (1) according to either claim 11 or claim 12, **characterised in that** the steam source (33) is provided outside the cooking chamber (2), and **in that** at least one steam inlet opening (4) is provided on the cooking chamber (2) in order to introduce steam (9) from the steam source (33) into the cooking chamber (2).

14. Domestic appliance (1) according to either claim 12 or claim 13, **characterised in that** the optical waveguide (15) and at least one outlet opening (8) and/or at least one steam inlet opening (4) are arranged on a common structural unit (10) which is provided on the cooking chamber (2) so as to be replaceable.

## Revendications

1. Appareil électroménager (1) avec un espace de réception (6), lequel est délimité par au moins une paroi (5), pour un produit (21) à recevoir, dans lequel l'appareil électroménager comprend un dispositif d'éclairage (7) avec une source de lumière (20) et un guide de lumière (15) conçu, tout au moins en partie, de manière élastique, en vue d'éclairer l'espace de réception (6), et dans lequel une lumière émise par la source de lumière (20) du dispositif d'éclairage (7) est couplée dans l'espace de réception (6) par l'intermédiaire du guide de lumière (15), dans lequel le guide de lumière (15) est disposé dans une ouverture (16) se trouvant dans la paroi (5) de l'espace de réception (6),
**caractérisé en ce que**
le guide de lumière est conçu de manière élastique et auto-étanche, tout au moins dans la zone de l'ouverture (16) se trouvant dans la paroi (6) de l'espace de réception (6).

2. Appareil électroménager (1) selon la revendication 1,
**caractérisé en ce que**
le guide de lumière (15) est conçu de manière résistant à la chaleur et à l'humidité, tout au moins dans une zone de l'ouverture (16) se trouvant dans la paroi (5) de l'espace de réception (6).

3. Appareil électroménager (1) selon l'une des revendications précédentes,
**caractérisé en ce que**
le guide de lumière (15) est constitué, tout au moins en partie, d'un matériau flexible et, de préférence, est constitué, tout au moins en partie, de silicone ou d'un matériau de type silicone.

4. Appareil électroménager (1) selon l'une des revendications précédentes,
**caractérisé en ce qu'**
au moins une section (17) du guide de lumière (15) est constituée, pour l'essentiel, d'un matériau élastique et au moins une section (27) du guide de lumière (15) est constituée, pour l'essentiel, d'un matériau rigide.

5. Appareil électroménager (1) selon l'une des revendications précédentes,
**caractérisé en ce qu'**
au moins un élément de guidage (26) est prévu au niveau du guide de lumière (15) afin de coupler au moins une source de lumière (20).

6. Appareil électroménager (1) selon l'une des revendications précédentes,
**caractérisé en ce que**
la source de lumière (20) est disposée de manière fixe, et le guide de lumière (15) est disposé de manière flottante.

7. Appareil électroménager (1) selon l'une des revendications précédentes,
**caractérisé en ce que**
la source de lumière (20) comprend au moins une diode électroluminescente (DEL), laquelle est disposée en particulier à l'extérieur, et de préférence à distance, de la paroi (5) de l'espace de réception (6).

8. Appareil électroménager (1) selon l'une des revendications précédentes,
**caractérisé en ce que**
l'au moins une source de lumière (20) et le guide de lumière (15) sont soutenus par une unité de support (31).

9. Appareil électroménager (1) selon l'une des revendications précédentes,
**caractérisé en ce que**
l'espace de réception (6) est conçu sous la forme d'une chambre de cuisson (2) et peut être chauffé par l'intermédiaire d'au moins une source de chaleur (3).

10. Appareil électroménager (1) selon la revendication 9,
**caractérisé en ce qu'**
au moins l'une des au moins une source de chaleur (3) est conçue sous la forme d'une source de micro-ondes (34).

11. Appareil électroménager (1) selon l'une des revendications 9 ou 10,
**caractérisé en ce qu'**
au moins l'une des au moins une source de chaleur (3) est conçue sous la forme d'une source de vapeur (33).

12. Appareil électroménager (1) selon la revendication 11
**caractérisé en ce qu'**
au moins un orifice de sortie (8) est prévu au niveau de la chambre de cuisson (2), par l'intermédiaire duquel de la vapeur (9) peut être évacuée en dehors de la chambre de cuisson (2).

13. Appareil électroménager (1) selon l'une des revendications 11 ou 12
**caractérisé en ce que**
la source de vapeur (33) est prévue à l'extérieur de la chambre de cuisson (2) et **en ce qu'**au moins un orifice de pénétration de la vapeur (4) est prévu au niveau de la chambre de cuisson (2) afin de canaliser de la vapeur (9) depuis la source de vapeur (33) jusque dans la chambre de cuisson (2).

14. Appareil électroménager (1) selon l'une des revendications 12 ou 13,
**caractérisé en ce que**
le guide de lumière (15) et au moins un orifice de sortie (8) et/ou au moins un orifice de pénétration de la vapeur (4) sont disposés au niveau d'une unité modulaire (10) commune, laquelle est prévue pour être interchangeable au niveau de la chambre de cuisson (2).
